# EUROPÄISCHE PATENTSCHRIFT

(11) **EP 3 536 547 B1**
(45) Veröffentlichungstag und Bekanntmachung des Hinweises auf die Patenterteilung: **01.05.2024**
(21) Anmeldenummer: 19155226.4
(22) Anmeldetag: 04.02.2019
(51) Int. Cl.: B60L 58/20, B60L 3/00

(54) **BATTERIEELEKTRISCH BETRIEBENES FLURFÖRDERZEUG MIT PUFFERBATTERIE ZUR BORDNETZVERSORGUNG**
BATTERY-POWERED INDUSTRIAL TRUCK WITH A BUFFER BATTERY FOR SUPPLY
CHARIOT DE MANUTENTION FONCTIONNANT SUR BATTERIE ÉLECTRIQUE POURVU DE BATTERIE TAMPON DESTINÉE À L'ALIMENTATION DU RÉSEAU DE BORD

(30) Priorität: 16.02.2018 DE 102018103498
(43) Veröffentlichungstag der Anmeldung: 11.09.2019
(73) Patentinhaber: STILL GmbH, 22113 Hamburg (DE)
(72) Erfinder: CORLEIS, Claas-Tido, 21109 Hamburg (DE); Strutz, Jan, 22043 Hamburg (DE); Raphaela, Gütschow, 22043 Hamburg (DE)
(74) Vertreter: Patentship Patentanwaltgesellschaft

(56) Entgegenhaltungen:
- EP-A1- 2 501 015
- DE-A1-102015 118 535
- US-A1- 2001 019 224
- US-A1- 2017 203 661
- US-A1- 2018 029 474

## Beschreibung

Die Erfindung betrifft ein batterieelektrisch betriebenes Flurförderzeug mit mindestens einem elektrischen Fahrmotor und einem elektrischen Bordnetz sowie mindestens einer Traktionsbatterie, die zumindest den Fahrmotor mit elektrischer Energie versorgt, wobei mindestens eine zusätzliche Pufferbatterie vorgesehen ist, die das elektrische Bordnetz mit elektrischer Energie versorgt.

Batterieelektrisch betriebene Flurförderzeuge, insbesondere Gabelstapler, Kommissionierfahrzeuge, Schleppfahrzeuge und Plattformfahrzeuge, besitzen mindestens einen elektrischen Fahrmotor für den Fahrantrieb und gegebenenfalls mindestens einen elektrischen Hydraulikpumpenmotor für die Arbeitshydraulik. Zur Versorgung des elektrischen Fahrmotors und gegebenenfalls des elektrischen Hydraulikpumpenmotors mit elektrischer Energie ist mindestens eine Traktionsbatterie vorgesehen, die typischerweise als Hochvoltbatterie mit einer Betriebsspannung von z.B. 24, 48 oder 80 Volt ausgebildet ist. Derartige batterieelektrisch betriebene Flurförderzeug verfügen üblicherweise auch über Sekundärverbraucher wie Fahrzeugsteuerungselektronik, Beleuchtung, Anzeigeinstrumente und Steuergeräte, die über ein Bordnetz versorgt werden. Das Bordnetz ist allerdings meist nicht für eine Hochvolt-Versorgung, sondern für eine Niedervolt-Versorgung, typischerweise für eine 12-Volt-Versorgung, ausgelegt. Daher müssen ein oder mehrere Spannungswandler, insbesondere Gleichstrom-Spannungswandler (DC/DC-Wandler), eingesetzt werden, um die als Hochvoltbatterie ausgebildete Traktionsbatterie zur Energieversorgung des Bordnetzes nutzen zu können. Dabei sind Leistung und Anzahl der Spannungswandler auf den maximalen Leistungsbedarf des Niedervolt-Bordnetzes ausgelegt.

Die Spannungswandler müssen insbesondere so ausgelegt sein, dass die Spitzenlast im 12-Volt-Bordnetz abgedeckt ist. Da die Spitzenlast höher ist als die Dauerlast, arbeiten die Spannungswandler typischerweise mit geringer Auslastung. Außerdem müssen sie dynamisch auf Lastspitzen reagieren können. Bei mehreren parallel geschalteten Spannungswandlern kommt es ferner zu ungleichmäßig verteilten Lasten.

Problematisch ist darüber hinaus, dass ohne verbundene Traktionsbatterie keine Versorgung der Komponenten im Bordnetz stattfindet. Sollte die Traktionsbatterie unvermittelt nicht mehr verfügbar sein, dann kommt es zum sofortigen Verlust sämtlicher Steuerungs- und Elektronikfunktionen des Bordnetzes. Üblicherweise sind batterieelektrisch betriebene Flurförderzeuge so ausgelegt, dass in diesem Fall der sichere Zustand gewährleistet wird, zum Beispiel durch Einfall einer Feststellbremse. Jedoch ist ein kontrolliertes Abstellen des Flurförderzeugs nicht möglich, wie zum Beispiel das Absenken einer aufgenommenen Last, oder das Anschalten der Beleuchtung zur Warnung.

Erschwerend kommt hinzu, dass durch den vermehrten Einsatz von Lithium-lonen-Batterien als Traktionsbatterien die Ausfallwahrscheinlichkeit erhöht wird, da Lithium-lonen-Batterien über ein Batterie-Management verfügen, das eine Trennung der Stromversorgung bei einem Batteriefehler durchführt.

Wird die Traktionsbatterie geladen, so sind die 12-Volt-Komponenten des Bordnetzes ebenfalls nicht mit elektrischer Energie versorgt. Es ist in diesem Zustand nicht möglich, eine elektronische Diagnosefunktion auszuführen, Betriebsstunden auszulesen oder die Beleuchtung zu aktivieren. Dadurch verlängert sich die Dauer aller Aktivitäten, zum Beispiel muss das Laden der Traktionsbatterie für die Servicedauer unterbrochen werden.

Häufig wird auch ein Lagerlogistiksystem auf dem Flurförderzeug eingesetzt, welches ebenfalls an das12-Volt-Bordnetz angeschlossen ist. Bei einem Wechsel der Traktionsbatterie muss ein solches System komplett heruntergefahren werden, um nach dem Batteriewechsel wieder hochgefahren zu werden. Eine Inbetriebnahme oder Aktualisierung des Systems ist außerdem nur bei vorhandener Traktionsbatterie möglich, und nicht während der Ladezeiten der Traktionsbatterie.

Darüber hinaus gibt es bei der Herstellung des Flurförderzeugs im Produktionsprozess des Flurförderzeugs mehrere Stationen, an denen eine Energieversorgung des Bordnetzes erforderlich ist. Aktuell wird dazu eine externe Versorgung an den Anschlüssen der Traktionsbatterie bereitgestellt. Bei Flurförderzeugen mit einer elektrisch aktuierten Feststellbremse ist ein Schleppen des Fahrzeuges nicht möglich, entsprechende Arbeitsschritte wie zum Beispiel das Anheben des Fahrzeuges, das Bereitstellen einer Traktionsbatterie, manuelles Lösen der elektrischen Feststellbremse über einen Seilzug oder ähnliches müssen erfolgen.

Außerdem kommt es häufig zu dem Fehler, dass ein Flurförderzeug nicht einschaltbar ist. Dabei stellt sich für den Fahrer- oder den Servicetechniker das Problem, dass die Ursache der Ausfall von diversen Komponenten sein kann, diese aber nicht differenziert diagnostiziert werden können. Mögliche Ursachen können z.B. eine defekte Traktionsbatterie, ein überlastetes 12-Volt-Bordnetz, ein defekter Spannungswandler oder eine Fehlfunktion einer Komponente des 12-Volt-Bordnetzes sein.

Ein weiteres Problem besteht darin, dass während eines längeren Abstellens des Flurförderzeugs minimale Ströme, so genannte Kriechströme, im 12-Volt-Bordnetz fließen. Diese Kriechstromleistung wird potenziert durch den schlechten Wirkungsgrad der DC/DC-Wandler im Niedrigst-Last-Bereich. Als Folge wird die Traktionsbatterie kontinuierlich entladen, so dass es zu einer für die Traktionsbatterie schädlichen Tiefentladung kommen kann.

Die DE 10 2015 118 535 A1 offenbart in der Figur 5 ein gattungsgemäßes batterieelektrisch betriebenes Flurförderzeug mit mindestens einem elektrischen Fahrmotor und einem einen Fahrzeugrechner umfassenden elektrischen Bordnetz sowie mindestens einer Traktionsbatterie, die zumindest den Fahrmotor mit elektrischer Energie versorgt, wobei mindestens eine zusätzliche Pufferbatterie vorgesehen ist, die das elektrische Bordnetz mit elektrischer Energie versorgt
Der vorliegenden Erfindung liegt die Aufgabe zugrunde, ein batterieelektrisch betriebenes Flurförderzeug der eingangs genannten Art so auszugestalten, dass ein zuverlässiger Betrieb des Flurförderzeugs ohne die geschilderten Probleme ermöglicht wird.

Diese Aufgabe wird erfindungsgemäß dadurch gelöst, dass eine von der Pufferbatterie mit elektrischer Energie versorgte elektrische Bremseinrichtung des Flurförderzeugs zur geregelten Abbremsung des Flurförderzeugs bei Funktionsstörungen der Traktionsbatterie vorgesehen ist, dass die Traktionsbatterie eine höhere Betriebsspannung als die Pufferbatterie aufweist und zum Laden der Pufferbatterie über mindestens einen Spannungswandler mit der Pufferbatterie verbunden ist, und dass der Spannungswandler als regelbarer Spannungswandler ausgebildet ist, der den Ladestrom für die Pufferbatterie in Abhängigkeit von Betriebsbedingungen des Flurförderzeugs steuert, wobei der Spannungswandler ausgebildet ist, zur Optimierung der Hubleistung oder der Beschleunigung des Flurförderzeugs die Ladestromversorgung für die Pufferbatterie zeitweise zu reduzieren oder zu unterbrechen, wodurch sämtliche elektrische Leistung der Traktionsbatterie für den elektrischen Fahrmotor des Fahrantriebs und/oder den elektrischen Hydraulikpumpenmotor der Arbeitshydraulik zur Verfügung steht, und wobei der Spannungswandler ausgebildet ist, beim Bremsen oder in stationärer Fahrt dann die Ladestromversorgung wieder hochzufahren.

Das Bordnetz wird somit bei dem batterieelektrisch betriebenen Flurförderzeug von einer zusätzlichen Pufferbatterie mit elektrischer Energie versorgt.

Durch die zusätzliche Pufferbatterie wird eine zuverlässige Energieversorgung des Bordnetzes auch bei Funktionsstörungen oder z.B. wartungsbedingter Stilllegung bzw. Entnahme oder Laden der Traktionsbatterie gewährleistet. Außerdem ist eine vom Stromnetz des Hochvolt-Systems des Flurförderzeugs unabhängige Stromversorgung des Bordnetzes möglich. Die Pufferbatterie kann gezielt auf die Bedürfnisse des Niedrigvolt-Bordnetzes angepasst werden.

Während die Traktionsbatterie den elektrischen Fahrmotor des elektrischen Antriebs und gegebenenfalls einen Hydraulikpumpenmotor der Arbeitshydraulik des Flurförderzeugs mit elektrischer Energie versorgt, dient die Pufferbatterie zur unabhängigen Energieversorgung des Bordnetzes. Zweckmäßigerweise ist hierbei die Traktionsbatterie über Stromleitungen, insbesondere für Betriebsspannungen von 24 bis 80 Volt ausgelegte, Hochspannungsleitungen mit dem Fahrmotor und gegebenenfalls mit dem Hydraulikpumpenmotor verbunden, während die Pufferbatterie über Stromleitungen, insbesondere für Betriebsspannungen von ca. 12 Volt ausgelegte, Niedrigspannungsleitungen mit dem Bordnetz verbunden ist.

Erfindungsgemäß ist eine von der Pufferbatterie mit elektrischer Energie versorgte elektrische Bremseinrichtung, beispielsweise eine Feststellbremse, des Flurförderzeugs vorgesehen, die eine geregelte Abbremsung des Flurförderzeugs bei Funktionsstörungen der Traktionsbatterie einleiten kann.

Die Traktionsbatterie wird zum Laden der Pufferbatterie eingesetzt. Da die Traktionsbatterie eine höhere Betriebsspannung aufweist als die Pufferbatterie, ist die Traktionsbatterie über mindestens einen Spannungswandler, insbesondere einen Gleichstrom-Spannungswandler (DC/DC-Wandler), mit der Pufferbatterie verbunden.

Dabei ist die Traktionsbatterie vorzugsweise auf eine Betriebsspannung von mindestens 24 Volt, insbesondere 24, 48 oder 80 Volt, ausgelegt, während die Pufferbatterie für eine Betriebsspannung von 12 Volt ausgelegt ist. Zweckmäßigerweise ist die Traktionsbatterie über Stromleitungen, insbesondere für Betriebsspannungen von 24 bis 80 Volt ausgelegte, Hochspannungsleitungen mit dem Spannungswandler verbunden, während der Spannungswandler über Stromleitungen, insbesondere für Betriebsspannungen von ca. 12 Volt ausgelegte, Niedrigspannungsleitungen mit der Pufferbatterie verbunden ist.

Eine besonders vorteilhafte Systemauslegung sieht vor, dass der Spannungswandler auf Dauerlast des Bordnetzes ausgelegt ist, während die Pufferbatterie auf Spitzenlast des Bordnetzes und/oder eine gewünschte Reservezeit des Bordnetzes ausgelegt ist. Durch die geringere und konstante Leistungsanforderung des Spannungswandlers gegenüber dem Stand der Technik, bei dem der Spannungswandler auf die Spitzenlast des Bordnetzes ausgelegt werden muss, ist dieser auch günstiger in der Anschaffung.

Als Pufferbatterie kann eine Standardbatterie verwendet werden, wie sie beispielsweise als Starterbatterie für verbrennungsmotorisch betriebene Flurförderzeuge üblich ist. Damit ist die Pufferbatterie günstig, frei skalierbar, beliebig einbaubar, wartungsfrei und in diversen Ausführungen verfügbar.

Vorteilhafterweise ist die Traktionsbatterie als Lithium-Ionen-Batterie ausgebildet.

Die Pufferbatterie kann als eine Lithium-Ionen-Batterie oder als eine Lithium-Eisen-Phosphat-Batterie oder als eine einfache Blei-Säure-Batterie ausgebildet sein.

Vorzugsweise erfolgt durch entsprechende Auslegung der Pufferbatterie und des Spannungswandlers eine Anpassung an unterschiedliche Bedürfnisse des Bordnetzes. So können die Pufferbatterie auf eine Batteriekapazität und der Spannungswandler auf eine Leistung ausgelegt sein, die an Anzahl und Energiebedarf der Komponenten des Bordnetzes angepasst sind.

Die Unabhängigkeit der Energieversorgung des Bordnetzes von der Traktionsbatterie ermöglicht auch, die Sicherheit des Flurförderzeugs im Betrieb zu erhöhen. Beim Auslegen von sicherheitstechnischen Systemen, die im Fehlerfall "safe operational" auszulegen sind, also ihre Funktion weiterhin erfüllen müssen, ist eine zweite Energiequelle an Bord von erheblichem Nutzen.

So kann eine von der Pufferbatterie mit elektrischer Energie versorgte Warneinrichtung vorgesehen sein, die eine Warnmeldung bei Funktionsstörungen der Traktionsbatterie ausgeben kann.

Eine weitere Möglichkeit zur Verbesserung der Sicherheit des Flurförderzeugs besteht darin, dass eine von der Pufferbatterie mit elektrischer Energie versorgte elektrische Lenkeinrichtung des Flurförderzeugs vorgesehen ist. Elektrische Lenkungen werden vermehrt in moderne Flurförderzeuge eingebaut. In diesem Fall wird durch die erfindungsgemäße Ausgestaltung sichergestellt, dass bei Verlust der Funktionsfähigkeit der Traktionsbatterie die Lenkfähigkeit durch die Energie der Pufferbatterie zumindest für eine gewisse Zeit erhalten bleibt.

Vorteilhafterweise ist eine Diagnoseeinrichtung vorgesehen, die für eine differenzierte Diagnose der Traktionsbatterie, des Spannungswandlers und der Pufferbatterie ausgebildet ist. Eine tiefentladene Traktionsbatterie kann von der Diagnoseeinrichtung ebenso diagnostiziert werden wie eine fehlerhafte Traktionsbatterie. Außerdem ist es möglich, gezielt das Bordnetz zu diagnostizieren. Bei einer Fehlermeldung kann z.B. differenziert festgestellt werden, ob die Traktionsbatterie defekt ist, der Spannungswandler (DC/DC-Wandler) gestört oder überlastet ist, untypisch hohe Ströme im Bordnetz fließen oder die Pufferbatterie defekt ist.

Erfindungsgemäß ist vorgesehen, dass der Spannungswandler als regelbarer Spannungswandler ausgebildet ist, der den Ladestrom für die Pufferbatterie in Abhängigkeit von Betriebsbedingungen des Flurförderzeugs steuert. Somit ist es möglich, die Ladestrategie der Pufferbatterie dynamisch zu regeln. So wird zur Optimierung der Hubleistung oder der Beschleunigung des Flurförderzeugs die Ladestromversorgung für die Pufferbatterie über den Spannungswandler zeitweise reduziert oder unterbrochen, wodurch sämtliche elektrische Leistung der Traktionsbatterie für den elektrischen Fahrmotor des Fahrantriebs und/oder den elektrischen Hydraulikpumpenmotor der Arbeitshydraulik zur Verfügung steht. Beim Bremsen oder in stationärer Fahrt wird dann die Ladestromversorgung wieder hochgefahren.

Denkbar sind ferner sekundäre Energiequellen zur Ladung der Pufferbatterie.

Die Erfindung bietet eine ganze Reihe von Vorteilen:
Bei Verlust der Funktionsfähigkeit der Traktionsbatterie bleibt das Bordnetz uneingeschränkt verfügbar im Rahmen der Batteriekapazität der Pufferbatterie. Ein sicheres Verlassen des Flurförderzeugs wird ermöglicht, die Beleuchtung und Elektronik bleiben betriebsbereit. Beim Laden oder bei Nichtverfügbarkeit der Traktionsbatterie ist die Elektronik uneingeschränkt verfügbar, Diagnose, Beleuchtung, Service, Flottenmanagement, Radio etc. sind nutzbar. Bei einem Wechsel der Traktionsbatterie kann das Flurförderzeug angeschaltet bleiben, wodurch sich die benötigten Zeiten, beispielsweise für den Service, reduzieren. Bei Verlust der Funktionsfähigkeit der Traktionsbatterie kann der Bediener gewarnt werden und hat Zeit, zu reagieren. Das Einfallen einer elektronischen Bremse, beispielsweise einer Feststellbremse, kann geregelt erfolgen, so dass ein sicheres Anhalten des Flurförderzeugs möglich bleibt. Beim Abschleppen oder Verladen des Flurförderzeugs ohne Traktionsbatterie können Beleuchtungs- und Warneinrichtungen genutzt werden. Es erhöht sich die Robustheit gegenüber zusätzlichen 12-Volt-Verbrauchern, wie zum Beispiel Kunden-Computern oder zusätzlichen Scheinwerfern. Außerdem kann eine tief entladene Traktionsbatterie von der Diagnoseeinrichtung diagnostiziert werden, ebenso eine fehlerhafte Traktionsbatterie. Es ist darüber hinaus möglich, differenziert das 12-Volt-Bordnetz zu diagnostizieren. Weiterhin wird eine Tiefentladung der Traktionsbatterie durch Kriechströme beim Abstellen des Flurförderzeugs über einen längeren Zeitraum vermieden. Dabei fließen zwar minimale Ströme aus der Pufferbatterie, jedoch ohne Verlustleistung des Spannungswandlers. Sofern die Pufferbatterie aufgrund der minimalen Ströme beim längeren Abstellen des Flurförderzeugs entladen sein sollte, kann die Pufferbatterie extern oder über den Spannungswandler wieder aufgeladen werden, es wird jedoch vermieden, dass beim Abstellen des Flurförderzeugs über einen längeren Zeitraum eine Tiefentladung der Traktionsbatterie auftritt. Schließlich wird auch die Sicherheit des Flurförderzeugs erhöht, da die sicherheitstechnischen Systeme auch bei Ausfall der Traktionsbatterie aufgrund der zusätzlichen Energiequelle ihre Funktion weiterhin erfüllen können.

Weitere Vorteile und Einzelheiten der Erfindung werden anhand der in den schematischen Figuren dargestellten Ausführungsbeispiele näher erläutert. Hierbei zeigen
- Figur 1: ein Schaltbild der Energieversorgung eines batterieelektrisch betriebenen Flurförderzeugs nach dem Stand der Technik und
- Figur 2: ein Schaltbild der Energieversorgung eines batterieelektrisch betriebenen Flurförderzeugs nach der Erfindung.

In den Figuren sind die entsprechenden Merkmale mit denselben Bezugsziffern bezeichnet.

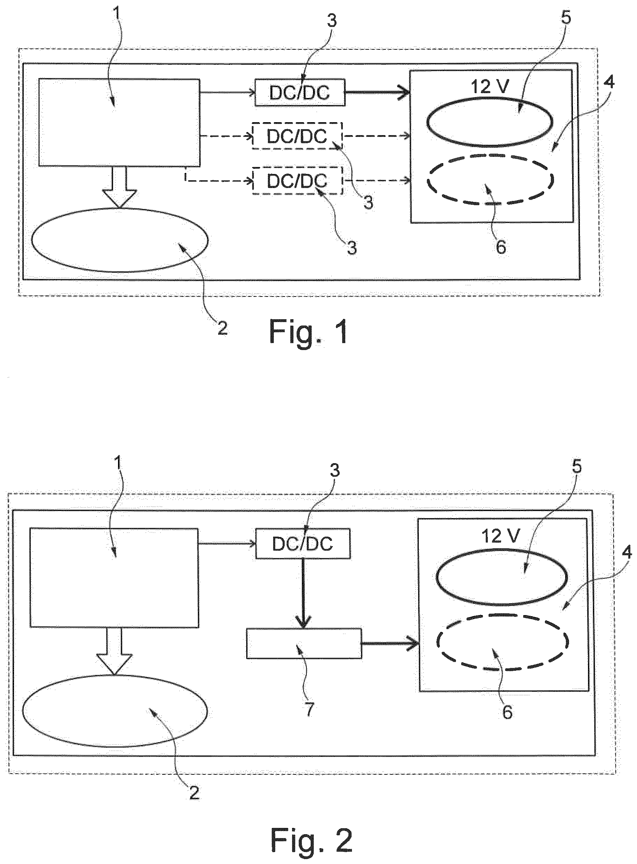

In der Figur 1 ist eine herkömmliche Energieversorgung eines batterieelektrisch betriebenen Flurförderzeugs dargestellt. Im vorliegenden Ausführungsbeispiel soll es sich bei dem Flurförderzeug um ein Flurförderzeug mit einem elektrischen Fahrantrieb und einer Arbeitshydraulik für ein Lastaufnahmemittel handeln. Dabei versorgt die Traktionsbatterie 1 die Einheit 2, in der mindestens ein elektrischer Fahrmotor des Fahrantriebs und mindestens ein elektrischer Hydraulikpumpenmotor der Arbeitshydraulik zusammengefasst sind, mit elektrischer Energie. Im Beispiel handelt es sich bei der Traktionsbatterie 1 um eine Lithium-lonen-Batterie mit einer Betriebsspannung von beispielsweise 48 Volt. Gleichzeitig versorgt die Traktionsbatterie 1 einen oder mehrere als Gleichstromspannungswandler (DC/DC-Wandler) ausgebildeten Spannungswandler 3 mit elektrischer Energie. Die Spannungswandler 3 transformieren die Spannung der Traktionsbatterie von 48 Volt auf die für das Bordnetz vorgesehene Spannung von 12 Volt. Somit können die Spannungswandler 3 die elektrische Energie für das auf eine Spannung von 12 Volt ausgelegte Bordnetz 4 liefern. Im Bordnetz 4 sind Standardkomponenten 5, z.B. Fahrzeugsteuerungselektronik, Beleuchtung, Anzeigeinstrumente und Steuergeräte, sowie optionale Komponenten 6, z.B. Lagerlogistiksystem, Navigationsgerät und Kommunikationseinrichtung, zusammengefasst.

Problematisch ist bei dieser Ausgestaltung nach dem Stand der Technik, dass ohne verbundene Traktionsbatterie 1 keine Versorgung der Komponenten 5, 6 im Bordnetz 4 stattfindet. Sollte die Traktionsbatterie 1 unvermittelt nicht mehr verfügbar sein, dann kommt es zum sofortigen Verlust sämtlicher Steuerungs- und Elektronikfunktionen im Bordnetz 4.

Die Figur 2 zeigt eine erfindungsgemäße Ausgestaltung der Energieversorgung eines batterieelektrisch betriebenen Flurförderzeugs. Dabei soll es sich ebenfalls um ein Flurförderzeug mit einem elektrischen Fahrantrieb und einer Arbeitshydraulik für ein Lastaufnahmemittel handeln. Wie im Beispiel von Figur 1 versorgt die Traktionsbatterie 1 die Einheit 2, in der mindestens ein elektrischer Fahrmotor des Fahrantriebs und mindestens ein elektrischer Hydraulikpumpenmotor der Arbeitshydraulik zusammengefasst sind, mit elektrischer Energie. Bei der Traktionsbatterie 1 handelt es sich wiederum um eine Lithium-Ionen-Batterie mit einer Betriebsspannung von beispielsweise 48 Volt.

Im Gegensatz zum Beispiel von Figur 1 ist jedoch bei der erfindungsgemäßen Ausgestaltung gemäß Figur 2 eine zusätzliche Pufferbatterie 7 vorgesehen, die eine Betriebsspannung von 12 Volt aufweist. Diese Pufferbatterie 7 versorgt das auf eine Spannung von 12 Volt ausgelegte Bordnetz 4 mit elektrischer Energie. Das Bordnetz 4 umfasst (wie im Beispiel von Figur 1) mindestens eine Standardkomponente 5, z.B. eine Fahrzeugsteuerungselektronik und/oder Beleuchtung und/oder Anzeigeinstrumente und/oder Steuergeräte, und/oder mindestens eine optionale Komponente 6, z.B. Lagerlogistiksystem und/oder Navigationsgerät und/oder Kommunikationseinrichtung.

Zum Laden der Pufferbatterie 7 wird die Traktionsbatterie 1 eingesetzt. Hierzu wird die Spannung der Traktionsbatterie 1 von beispielsweise 48 Volt in einem als Gleichstromspannungswandler (DC/DC-Wandler) ausgebildeten Spannungswandler 3 auf die für die Pufferbatterie 7 vorgesehene Spannung von 12 Volt transformiert.

Die Versorgung des Bordnetzes 4 entspricht nun der eines verbrennungsmotorisch angetriebenen Flurförderzeugs. Die Traktionsbatterie 1 entspricht dem Verbrennungsmotor, der eine Lichtmaschine antreibt. Der Spannungswandler 3 entspricht der Lichtmaschine, die den Ladestrom für die Batterie liefert.

## Patentansprüche

1. Batterieelektrisch betriebenes Flurförderzeug mit mindestens einem elektrischen Fahrmotor und einem elektrischen Bordnetz (4) sowie mindestens einer Traktionsbatterie (1), die zumindest den Fahrmotor mit elektrischer Energie versorgt, wobei mindestens eine zusätzliche Pufferbatterie (7) vorgesehen ist, die das elektrische Bordnetz (4) mit elektrischer Energie versorgt, **dadurch gekennzeichnet, dass** eine von der Pufferbatterie (7) mit elektrischer Energie versorgte elektrische Bremseinrichtung des Flurförderzeugs zur geregelten Abbremsung des Flurförderzeugs bei Funktionsstörungen der Traktionsbatterie (1) vorgesehen ist,
dass die Traktionsbatterie (1) eine höhere Betriebsspannung als die Pufferbatterie (7) aufweist und zum Laden der Pufferbatterie (7) über mindestens einen Spannungswandler (3) mit der Pufferbatterie (7) verbunden ist, und
dass der Spannungswandler (3) als regelbarer Spannungswandler (3) ausgebildet ist, der den Ladestrom für die Pufferbatterie (7) in Abhängigkeit von Betriebsbedingungen des Flurförderzeugs steuert,
wobei der Spannungswandler (3) ausgebildet ist, zur Optimierung der Hubleistung oder der Beschleunigung des Flurförderzeugs die Ladestromversorgung für die Pufferbatterie (7) zeitweise zu reduzieren oder zu unterbrechen, wodurch sämtliche elektrische Leistung der Traktionsbatterie (1) für den elektrischen Fahrmotor des Fahrantriebs und/oder den elektrischen Hydraulikpumpenmotor der Arbeitshydraulik zur Verfügung steht, und wobei der Spannungswandler (3) ausgebildet ist, beim Bremsen oder in stationärer Fahrt dann die Ladestromversorgung wieder hochzufahren.

2. Batterieelektrisch betriebenes Flurförderzeug nach Anspruch 1, **dadurch gekennzeichnet, dass** die Traktionsbatterie (1) für eine Betriebsspannung von mindestens 24 Volt ausgelegt ist, während die Pufferbatterie (7) für eine Betriebsspannung von 12 Volt ausgelegt ist.

3. Batterieelektrisch betriebenes Flurförderzeug nach Anspruch 2, **dadurch gekennzeichnet, dass** der Spannungswandler (3) auf Dauerlast ausgelegt ist, während die Pufferbatterie (7) auf Spitzenlast ausgelegt ist.

4. Batterieelektrisch betriebenes Flurförderzeug nach einem der Ansprüche 1 bis 3, **dadurch gekennzeichnet, dass** die Traktionsbatterie (1) als Lithium-lonen-Batterie ausgebildet ist.

5. Batterieelektrisch betriebenes Flurförderzeug nach einem der Ansprüche 1 bis 4, **dadurch gekennzeichnet, dass** die Pufferbatterie (7) als Blei-Säure-Batterie oder Lithium-Eisen-Phosphat-Batterie oder Lithium-lonen-Batterie ausgebildet ist.

6. Batterieelektrisch betriebenes Flurförderzeug nach einem der Ansprüche 1 bis 5, **dadurch gekennzeichnet, dass** die Pufferbatterie (7) auf eine Batteriekapazität und der Spannungswandler (3) auf eine Leistung ausgelegt sind, die an Anzahl und Energiebedarf der Komponenten (5, 6) des Bordnetzes (4) angepasst sind.

7. Batterieelektrisch betriebenes Flurförderzeug nach einem der Ansprüche 1 bis 6, **dadurch gekennzeichnet, dass** eine von der Pufferbatterie (7) mit elektrischer Energie versorgte Warneinrichtung zur Ausgabe einer Warnmeldung bei Funktionsstörungen der Traktionsbatterie (1) vorgesehen ist.

8. Batterieelektrisch betriebenes Flurförderzeug nach einem der Ansprüche 1 bis 7, **dadurch gekennzeichnet, dass** eine von der Pufferbatterie (7) mit elektrischer Energie versorgte elektrische Lenkeinrichtung des Flurförderzeugs vorgesehen ist.

9. Batterieelektrisch betriebenes Flurförderzeug nach einem der Ansprüche 1 bis 8, **dadurch gekennzeichnet, dass** eine Diagnoseeinrichtung vorgesehen ist, die für eine differenzierte Diagnose der Traktionsbatterie (1), des Spannungswandlers (3) und der Pufferbatterie (7) ausgebildet ist.

## Claims

1. Battery-electrically operated industrial truck having at least one electric traction motor and one on-board electrical system (4) and at least one traction battery (1) which supplies at least the traction motor with electrical energy, wherein at least one additional buffer battery (7) is provided, which supplies the on-board electrical system (4) with electrical energy, **characterized in that** an electric brake device of the industrial truck, which electric brake device is supplied with electrical energy by the buffer battery (7), is provided for controlled braking of the industrial truck in the event of operational problems with the traction battery (1),
**in that** the traction battery (1) has a higher operating voltage than the buffer battery (7) and is connected to the buffer battery (7) via at least one voltage transformer (3) for the purpose of charging the buffer battery (7), and
**in that** the voltage transformer (3) is configured as a controllable voltage transformer (3) which controls the charging current for the buffer battery (7) depending on operating conditions of the industrial truck,
wherein the voltage converter (3) is configured to temporarily reduce or interrupt the supply of charging current for the buffer battery (7) in order to optimize the lifting power or the acceleration of the industrial truck, as a result of which all the electrical power of the traction battery (1) is available to the electric traction motor of the traction drive and/or to the electric hydraulic pump motor of the working hydraulics, and wherein the voltage transformer (3) is configured to then increase the supply of charging current again during braking or steady-state driving.

2. Battery-electrically operated industrial truck according to Claim 1, **characterized in that** the traction battery (1) is designed for an operating voltage of at least 24 volts, whereas the buffer battery (7) is designed for an operating voltage of 12 volts.

3. Battery-electrically operated industrial truck according to Claim 2, **characterized in that** the voltage transformer (3) is designed for continuous load, whereas the buffer battery (7) is designed for peak load.

4. Battery-electrically operated industrial truck according to any of Claims 1 to 3, **characterized in that** the traction battery (1) is configured as a lithium-ion battery.

5. Battery-electrically operated industrial truck according to any of Claims 1 to 4, **characterized in that** the buffer battery (7) is configured as a lead-acid battery or a lithium iron phosphate battery or a lithium-ion battery.

6. Battery-electrically operated industrial truck according to any of Claims 1 to 5, **characterized in that** the buffer battery (7) is designed for a battery capacity and the voltage transformer (3) is designed for a power that are adapted to the number of and energy requirement of the components (5, 6) of the on-board electrical system (4).

7. Battery-electrically operated industrial truck according to any of Claims 1 to 6, **characterized in that** a warning device supplied with electrical energy by the buffer battery (7) is provided for outputting a warning message in the event of operational problems with the traction battery (1).

8. Battery-electrically operated industrial truck according to any of Claims 1 to 7, **characterized in that** an electric steering device of the industrial truck, the electric steering device being supplied with electrical energy by the buffer battery (7), is provided.

9. Battery-electrically operated industrial truck according to any of Claims 1 to 8, **characterized in that** a diagnosis device is provided, which is configured for differentiated diagnosis of the traction battery (1), the voltage transformer (3) and the buffer battery (7).

## Revendications

1. Chariot de manutention fonctionnant sur batterie électrique, comprenant au moins un moteur de traction électrique et un réseau de bord électrique (4), ainsi qu'au moins une batterie de traction (1) qui alimente en énergie électrique au moins le moteur de traction, dans lequel au moins une batterie tampon supplémentaire (7) est prévue qui alimente en énergie électrique le réseau de bord électrique (4),
**caractérisé en ce qu'**un dispositif de freinage électrique, alimenté en énergie électrique par la batterie tampon (7), du chariot de manutention est prévu pour le freinage régulé du chariot de manutention en cas de dysfonctionnements de la batterie de traction (1),
**en ce que** la batterie de traction (1) présente une tension de fonctionnement supérieure à celle de la batterie tampon (7) et est reliée à la batterie tampon (7) par l'intermédiaire d'au moins un convertisseur de tension (3) pour charger la batterie tampon (7), et
**en ce que** le convertisseur de tension (3) est réalisé sous la forme d'un convertisseur de tension (3) réglable qui commande le courant de charge pour la batterie tampon (7) en fonction des conditions de fonctionnement du chariot de manutention,
dans lequel, en vue d'optimiser la puissance de levage ou l'accélération du chariot de manutention, le convertisseur de tension (3) est réalisé pour réduire ou couper temporairement l'alimentation en courant de charge pour la batterie tampon (7), de sorte que toute la puissance électrique de la batterie de traction (1) est disponible pour le moteur de traction électrique de l'entraînement de traction et/ou pour le moteur de pompe hydraulique de l'hydraulique de travail, et dans lequel le convertisseur de tension (3) est réalisé pour redémarrer ensuite l'alimentation en courant de charge en cas de freinage ou en mouvement stationnaire.

2. Chariot de manutention fonctionnant sur batterie électrique selon la revendication 1, **caractérisé en ce que** la batterie de traction (1) est conçue pour une tension de fonctionnement d'au moins 24 volts, alors que la batterie tampon (7) est conçue pour une tension de fonctionnement de 12 volts.

3. Chariot de manutention fonctionnant sur batterie électrique selon la revendication 2, **caractérisé en ce que** le convertisseur de tension (3) est conçu pour une charge continue, alors que la batterie tampon (7) est conçue pour une charge de pointe.

4. Chariot de manutention fonctionnant sur batterie électrique selon l'une quelconque des revendications 1 à 3, **caractérisé en ce que** la batterie de traction (1) est réalisée sous forme de batterie lithium-ion.

5. Chariot de manutention fonctionnant sur batterie électrique selon l'une quelconque des revendications 1 à 4, **caractérisé en ce que** la batterie tampon (7) est réalisée sous forme de batterie plomb-acide ou de batterie lithium-fer-phosphate ou de batterie lithium-ion.

6. Chariot de manutention fonctionnant sur batterie électrique selon l'une quelconque des revendications 1 à 5, **caractérisé en ce que** la batterie tampon (7) est conçue pour une capacité de batterie et le convertisseur de tension (3) est conçu pour une puissance qui sont adaptés au nombre et à la demande en énergie des composants (5, 6) du réseau de bord (4).

7. Chariot de manutention fonctionnant sur batterie électrique selon l'une quelconque des revendications 1 à 6, **caractérisé en ce qu'**un dispositif d'alarme alimenté en énergie électrique par la batterie tampon (7) est prévu pour émettre un message d'alarme en cas de dysfonctionnements de la batterie de traction (1).

8. Chariot de manutention fonctionnant sur batterie électrique selon l'une quelconque des revendications 1 à 7, **caractérisé en ce qu'**un dispositif de direction électrique du chariot de manutention, alimenté en énergie électrique par la batterie tampon (7), est prévu.

9. Chariot de manutention fonctionnant sur batterie électrique selon l'une quelconque des revendications 1 à 8, **caractérisé en ce qu'**un dispositif de diagnostic est prévu qui est réalisé pour un diagnostic différencié de la batterie de traction (1), du convertisseur de tension (3) et de la batterie tampon (7) .
